(19) Europäisches Patentamt
European Patent Office
Office européen des brevets

(11) EP 3 133 104 B1

(12) EUROPÄISCHE PATENTSCHRIFT

(45) Veröffentlichungstag und Bekanntmachung des Hinweises auf die Patenterteilung:
**15.04.2020 Patentblatt 2020/16**

(51) Int Cl.:
***C08G 69/26*** *(2006.01)* ***C08L 77/06*** *(2006.01)*
***C08K 3/00*** *(2018.01)* ***C08K 3/22*** *(2006.01)*

(21) Anmeldenummer: **16181963.6**

(22) Anmeldetag: **29.07.2016**

(54) **POLYAMIDZUSAMMENSETZUNGEN**

POLYAMIDE COMPOSITIONS

COMPOSITIONS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2015 EP 15181927**

(43) Veröffentlichungstag der Anmeldung:
**22.02.2017 Patentblatt 2017/08**

(73) Patentinhaber: **LANXESS Deutschland GmbH**
**50569 Köln (DE)**

(72) Erfinder:
- **ENDTNER, Jochen**
  **50679 Köln (DE)**
- **MORICK, Joachim**
  **51371 Leverkusen (DE)**
- **BIENMÜLLER, Matthias**
  **47803 Krefeld (DE)**

(56) Entgegenhaltungen:
**EP-A1- 0 335 165** **EP-A1- 2 816 083**
**EP-A2- 0 605 861** **EP-A2- 0 614 933**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 133 104 B1

## Beschreibung

Die vorliegende Erfindung betrifft Polyamid basierte Zusammensetzungen enthaltend Bornitrid und Magnesiumhydroxid sowie die Verwendung dieser Zusammensetzungen zur Herstellung von Erzeugnissen mit erhöhten Flammschutzanforderungen, erhöhter Wärmeleitfähigkeit und isotroper Schwindung bei gleichzeitig hinreichenden mechanischen Eigenschaften.

Im Spritzgussprozess glasfaserverstärkter thermoplastischer Formmassen treten je nach Bauteil verschiedene Strömungsformen gekoppelt und simultan nebeneinander auf. Während z. B. Dehnströmungen die Kurzglasfasern eher radial um den Anspritzpunkt ausrichten, bewirken die über den Fliessquerschnitt auftretenden Scherströmungen eine Rotation der Fasern. Abhängig vom verwendeten Kunststoff, von der vorliegenden Bauteilgeometrie und den Prozessbedingungen, ergibt sich eine Dreischichtverteilung der als Füllstoff eingesetzten Kurzglasfasern. Am Rand des Bauteils liegen diese eher in Spritzrichtung, während in der Mitte eher eine Querorientierung vorherrscht.

Die sich daraus ergebenden Schichtdicken hängen hierbei sehr stark von den rheologischen Eigenschaften der Schmelze ab. Je nach Fließgeometrie und dem Grad der Strukturviskosität stellen sich am Bauteil unterschiedliche Schichtdickenverteilungen ein. Die Eigenschaft von Füllstoffen wie Glasfasern, nach verschiedenen Richtungen verschiedene physikalische Eigenschaften zu zeigen, wird als Anisotropie bezeichnet.

Insbesondere die mechanischen Eigenschaften werden in erheblichem Maße von der anisotropen Faserverteilung beeinflusst. Je nach Fasergehalt können sich richtungsabhängig sowohl Steifigkeit als auch ertragbare Spannung bis zu einem Faktor 2 unterscheiden; siehe:
http://www.plasticsportal.net/wa/plasticsEU~de_DE/portal/show/content/technical_resourc es/ultrasim/ultrasim_work_areas_anisotropie

Die Anisotropie ist deshalb besonders bei glasfaserverstärkten Kunststoffen zu beachten. Im Kunststoff eingebettete Verstärkungen in Form von Mikrofasern und -körpern aus Glas, Kohlenstoff u.a., geben dem mechanisch belasteten Bauteil eine bessere Steifigkeit, höhere mechanische Festigkeit und Wärmeformbeständigkeit. Die Kunststoffmatrix verteilt dabei die auf das Bauteil einwirkende Belastung auf die Verstärkungsstoffe und fügt die einzelnen Werkstoffkomponenten zu einem sich ergänzenden Werkstoffsystem zusammen.

## Stand der Technik

Aus EP 0 605 861 A2 sind halogenfreie, flammwidrige, glasfaserverstärkte Polyamidformmassen bekannt, die unter anderem Magnesiumhydroxid als flammwidrig machende Komponente enthalten. Nachteilig an den Zusammensetzungen der EP 0 605 861 A2 ist die Tatsache, dass eine V0 Einstufung als Klassifizierung der Flammwidrigkeit zwar möglich ist, aufgrund des Einsatzes der Glasfaser aber keine isotrope Schwindung erreicht werden kann und zudem auch nur eine unzureichende Wärmeleitfähigkeit von kleiner als 1 W/(m•K) möglich ist.

WO 2014/202649 A1 beschreibt Bornitrid als Leitfähigkeitsfüllstoff und wenigstens einen verstärkenden Füllstoff enthaltende Polyamid 6 oder Polyamid 66 Formmassen mit hoher thermischer Leitfähigkeit und hohen mechanischen Kennwerten.

EP 0 614 933 A2 betrifft halogenfreie flammgeschützte thermoplastische Polyamidformmassen enthaltend

A) 40 bis 98 Gew.-% eines thermoplastischen Polyamids
B) 0,5 bis 30 Gew.-% Melamincyanurat
C) 0,5 bis 50 Gew.-% Magnesiumhydroxid
D) 1 bis 50 Gew.-% eines faser- oder teilchenförmigen Füllstoffes oder deren Mischungen, welcher verschieden von B) und C) ist,
E) 0 bis 30 Gew.-% übliche Zusatzstoffe oder Verarbeitungshilfsmittel.

EP 0 355 165 A1 beschreibt durch Magnesiumhydroxid flammhemmend eingestellte faserverstärkte thermoplastisch verarbeitbare Polyamidformmassen, ein Verfahren zu ihrer Herstellung und deren Verwendung.

EP 2 816 083 A1 betrifft ein Bauteil hergestellt aus einem Polymer-Bornitrid-Compound, wobei das Polymer-Bornitrid-Compound zumindest einen Polymerwerkstoff, zumindest einen wärmeleitenden Füllstoff und zumindest einen Verstärkungsfüllstoff umfasst, und wobei der zumindest eine wärmeleitende Füllstoff Bornitrid-Agglomerate umfasst, das Polymer-Bornitrid Compound selber, sowie die Verwendung daraus herzustellender Bauteile zur Wärmeleitung zur Temperierung von Komponenten oder Baugruppen.

Ausgehend von diesem Stand der Technik bestand die Aufgabe der vorliegenden Erfindung darin, halogenfreie, flammgeschützte, Polyamid basierte Formmassen und daraus herzustellende Erzeugnisse mit einer Wärmeleitfähigkeit größer als 1,0 W/(m•K) (gemessen senkrecht zur Fließrichtung; engl. "through-plane") und einer weitestgehend isotropen Schwindung bereit zu stellen, die wenigstens eine V0 Einstufung erlangen, einen GWFI von wenigstens 850 °C auch bei 0,75 mm Wandstärke aufweisen und dabei mechanische Eigenschaften hinsichtlich Biegefestigkeit und vor allem

Randfaserdehnung erhalten, wie sie für Anwendungen in Erzeugnissen bzw. Komponenten für strom- und spannungsführende Bauteile erforderlich sind, wobei unter einer weitestgehend isotropen Schwindung oder verzugsarmen Schwindung erfindungsgemäß eine Schwindung verstanden wird, bei der der Quotient aus Verarbeitungsschwindung parallel zur Spritzrichtung und Verarbeitungsschwindung senkrecht zur Spritzrichtung oberhalb von 0,8, bevorzugt oberhalb von 0,9, liegt.

Wegen des Einsatzes in spannungsführenden Teilen darf die erhöhte Wärmeleitfähigkeit dabei nicht mit einer erhöhten elektrischen Leitfähigkeit einhergehen, so dass ein spezifischer Oberflächenwiderstand von 1E11 Ohm, gemessen gemäß IEC60093, nach Möglichkeit nicht unterschritten werden soll.

Wegen der potentiellen Einsatzmöglichkeiten in LED-Anwendungen wird zudem eine Reflexion von mindestens 80% als vorteilhaft erachtet und angestrebt. Als Wert für die Reflexion wird dabei der Glanzwert bei 500 nm gemäß DIN 5033-4, gemessen. Im Rahmen der vorliegenden Erfindung wurde dieser auf einem Farbmessgerät der Firma Minolta (CM2600D) unter Einsatz von D65-Licht bestimmt.

Lösung der Aufgabe und Gegenstand der vorliegenden Erfindung sind Zusammensetzungen enthaltend

a) Polyamid 6 oder Polyamid 66,
b) Magnesiumhydroxid mit einem Si-Gehalt < 15000 ppm und
c) Bornitrid,
wobei auf 100 Gewichtsteile der Komponente a) 100 bis 280 Gewichtsteile der Komponente b) und 10 bis 150 Gewichtsteile der Komponente c) eingesetzt werden.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

**Bevorzugte Ausführungsformen der Erfindung**

Vorzugsweise betrifft die vorliegende Erfindung Zusammensetzungen, die Komponente b) zusätzlich in einer Reinheit von mindestens 96 Gew.-% enthalten.

Besonders bevorzugt betrifft die vorliegende Erfindung Zusammensetzungen, worin Komponente b) zusätzlich einen Fe-Gehalt < 1500 ppm aufweist.

Vorzugsweise betrifft die vorliegende Erfindungen Zusammensetzungen enthaltend zusätzlich zu a), b) und c) noch **d) Titandioxid.**

Vorzugsweise betrifft die vorliegende Erfindung Zusammensetzungen, die zusätzlich zu den Komponenten a), b), c) und d) noch

**e) wenigstens einen Thermostabilisator** aus der Gruppe der sterisch gehinderten Phenole enthaltend wenigstens eine Struktur der Formel (I),

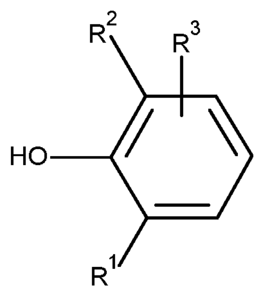

(I)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

In einer alternativen Ausführungsform betrifft die vorliegende Erfindung Zusammensetzungen die zusätzlich zu den Komponenten a), b) und c), **also ohne d),**

**e) wenigstens einen Thermostabilisator** aus der Gruppe der sterisch gehinderten Phenole enthaltend wenigstens eine Struktur der Formel (I),

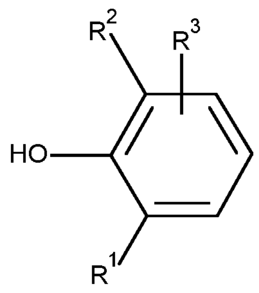

(I)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

Vorzugsweise werden auf 100 Gewichtsteile Komponente a) 120 bis 250 Gewichtsteile von Komponente b) und 15 bis 60 Gewichtsteile von Komponente c) eingesetzt. Ganz besonders bevorzugt werden auf 100 Gewichtsteile Komponente a) 150 bis 210 Gewichtsteile Komponente b) und 20 bis 45 Gewichtsteile Komponente c) eingesetzt.

Im Falle des zusätzlichen Einsatzes von Komponente d) werden auf 100 Gewichtsteile Komponente a) 1 bis 150 Gewichtsteile, vorzugsweise 10 bis 100 Gewichtsteile und besonders bevorzugt 30 bis 70 Gewichtsteile **Titandioxid** eingesetzt.

Im Falle des zusätzlichen Einsatzes von Komponente e) werden auf 100 Gewichtsteile Komponente a) 0,01 bis 3 Gewichtsteile, vorzugsweise 0,05 bis 1 und besonders bevorzugt 0,1 bis 0,5 Gewichtsteile **Thermostabilisator** eingesetzt.

Die erfindungsgemäßen Zusammensetzungen, die in der Kunststofftechnik zusammenfassend auch als Formmassen bezeichnet werden, fallen bei der Bearbeitung der Komponenten a) bis c) sowie ggf. d) und e) vorzugsweise als Granulat, in Strangform oder als Pulver an. Die Zubereitung erfolgt durch Mischen der erfindungsgemäßen Zusammensetzungen in wenigstens einem Mischwerkzeug, vorzugsweise einem Compounder, besonders bevorzugt einem gleichsinnig drehenden Zweiwellenextruder. Der Mischvorgang der Komponenten a) bis c), sowie gegebenenfalls wenigstens einer weiteren Komponente d) und/ oder e) zur Herstellung erfindungsgemäßer Zusammensetzungen in Form von Pulvern, Granulaten oder in Strangform wird in der Kunststofftechnik oft auch als Compoundierung bezeichnet. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten a), b) und c) bestehen, oder aber zusätzlich zu den Komponenten a), b) und c) noch weitere Komponenten enthalten, vorzugsweise wenigstens eine der Komponenten d) und/oder e) und/oder der im Folgenden definierten Komponenten f) bis h). Im Falle der Formmassen und daraus herzustellender Erzeugnisse liegt der Anteil der erfindungsgemäßen Zusammensetzungen in diesen bevorzugt im Bereich von 40 bis 100 Gew.-% vor, wobei es sich bei den übrigen Bestandteilen um Zusatzstoffe handelt, die der Fachmann entsprechend dem späteren Einsatz der Erzeugnisse auswählt, bevorzugt aus wenigstens einer der Komponenten d) bis h). Enthalten die Formmassen zusätzlich zu den Komponenten a), b), c) noch weitere Komponenten, insbesondere wenigstens eine der unten aufgeführten Komponenten d), und/oder e) und/oder f) und/oder g) und/oder h), so wird der Anteil wenigstens einer der Komponenten a), b), c) soweit reduziert, dass die Summe aller Gewichtsprozente in der Formmasse 100 ergibt.

In einer bevorzugten Ausführungsform enthalten die Zusammensetzungen sowie die daraus herzustellenden Formmassen und Erzeugnisse zusätzlich zu den Komponenten a) bis e) oder anstelle der Komponenten d) und/oder e) noch f) wenigstens einen **Füllstoff** aus der Gruppe Glaskugeln, gemahlenes Glas, amorphe Kieselsäure, Calciumsilikat, Calciummetasilikat, Magnesiumcarbonat, Kaolin, calciniertes Kaolin, Kreide, Glimmer, Phlogopit, Bariumsulfat, Feldspat und Montmorillonit enthalten. Vorzugsweise werden auf 100 Gewichtsteile der Komponente a) 5 bis 100 Gewichtsteile, besonders bevorzugt 10 bis 60 Gewichtsteile, ganz besonders bevorzugt 20 bis 40 Gewichtsteile von Komponente f) eingesetzt.

In einer bevorzugten Ausführungsform enthalten die Zusammensetzungen sowie die daraus herzustellenden Formmassen und Erzeugnisse zusätzlich zu den Komponenten a) bis f) oder anstelle der Komponenten d) und/oder e) und/oder f noch g) wenigstens einen **Entformer.** Vorzugsweise werden auf 100 Gewichtsteile der Komponente a) 0,05 bis 5 Gewichtsteile, besonders bevorzugt 0,2 bis 2 Gewichtsteile, ganz besonders bevorzugt 0,5 bis 1,6 Gewichtsteile von Komponente g) eingesetzt.

In einer bevorzugten Ausführungsform enthalten die Zusammensetzungen sowie die daraus herzustellenden Formmassen und Erzeugnisse zusätzlich zu den Komponenten a) bis g) oder anstelle der Komponenten d) und/oder e) und/oder f) und/oder g) noch h) wenigstens ein **Additiv.** Vorzugsweise werden auf 100 Gewichtsteile der Komponente a) 0,01 bis 10 Gewichtsteile, besonders bevorzugt 0,05 bis 5 Gewichtsteile, ganz besonders bevorzugt 0,1 bis 2 Gewichtsteile von Komponente h) eingesetzt.

**Komponente** a)

Als Komponente a) enthalten die Zusammensetzungen PA 6 [CAS Nr. 25038-54-4] oder PA 66 [CAS Nr. 32131-17-2]. Copolyamide auf Basis von PA 6 und/oder PA 66 werden vom Gegenstand der vorliegenden Erfindung mit umfasst.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha$ ,$\omega$-Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976. Vorzugsweise wird als Komponente a) Polyamid 6 oder Polyamid 66 mit einer Viskositätszahl im Bereich von 80 bis 180 ml/g eingesetzt, wobei diese in einer 0,5 gew.-%igen Lösung in 96 gew.-%iger Schwefelsäure bei 25 °C gemäß ISO 307 bestimmt wird.

Besonders bevorzugt wird als Komponente a) Polyamid 6 mit einer Viskositätszahl im Bereich von 85 bis 160 ml/g, ganz besonders bevorzugt mit einer Viskositätszahl im Bereich von 90 bis 140 ml/g, eingesetzt.

Besonders bevorzugt wird als Komponente a) Polyamid 66 mit einer Viskositätszahl im Bereich von 100 bis 170 ml/g, ganz besonders bevorzugt mit einer Viskositätszahl im Bereich von 110 bis 160 ml/g, eingesetzt.
Aus Viskositätsmessungen in Lösung bestimmt man den K-Wert, einen Molekülparameter mit dem die Fließeigenschaften von Kunststoffen gekennzeichnet werden können. Vereinfacht gilt: $[\eta] = 2{,}303 \times (75\ k^2 + k)$ mit K-Wert = 1000 k und $[\eta]$ = Staudinger Viskosität. Die Viskositätszahl J in $cm^3/g$ kann daraus ohne komplizierte Umrechnung nach DIN 53726 ermittelt werden.

$$J = \left(\frac{\eta}{\eta_0} - 1\right) \cdot \frac{1}{c}$$

Siehe: http://www.mhaeberl.de/KUT/3Kunststoffschmelze.htm. Für die Praxis existieren Umrechnungstabellen K-Wert in Viskositätszahl J.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß als Komponente a) einzusetzenden PA6 und PA66 können nach verschiedenen Verfahren hergestellt werden und in einer Ausführungsform in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, Acrylnitril-Butadien-Styrol-Copolymerisat (ABS), wobei ggf. ein oder mehrere Kompatibilisatoren eingesetzt werden können. Die Eigenschaften der als Komponente a) einzusetzenden PA6 und PA66 lassen sich durch Zusatz von Elastomeren verbessern, z. B. im Hinblick auf die Schlagzähigkeit. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden verlaufen meist über die Polykondensation in der Schmelze. Im Rahmen der vorliegenden Erfindung wird auch die hydrolytische Polymerisation von Lactamen als Polykondensation verstanden.

Bei den als Komponente a) einzusetzenden Polyamiden PA 6 und PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Das als Komponente a) einzusetzende Polyamid 6 ist erhältlich aus $\varepsilon$ Caprolactam. Das als Komponente a) einzusetzende Polyamid 66 ist erhältlich aus Hexamethylendiamin und Adipinsäure.

Bevorzugt sind weiterhin die meisten auf PA 6, PA 66 bzw. auf deren Copolyamiden basierende Compounds, bei denen auf eine Polyamidgruppe in der Polymerkette 3 bis 11 Methylengruppen, insbesondere ganz besonders bevorzugt 4 bis 6 Methylengruppen kommen.

Erfindungsgemäß ist dabei PA6 gegenüber PA66 ganz besonders bevorzugt.

Polyamid 6 ist beispielswiese als Durethan® B26 bei der Lanxess Deutschland GmbH, Köln, und Polyamid 66 als Ultramid® A27E bei der BASF SE, Ludwigshafen, erhältlich.

**Komponente b)**

Magnesiumhydroxid [CAS Nr. 1309-42-8] kann aufgrund seiner Herkunft und Herstellungsweise verunreinigt sein. Typische Verunreinigungen sind z. B. Silicium-, Eisen-, Calcium- und/oder Aluminium-haltige Spezies, die beispielsweise in Form von Oxiden in den Magnesiumhydroxid-Kristallen eingelagert sein können. Die Reinheit des Magnesiumhydroxids ergibt sich aus einem möglichst kleinen Anteil an Spezies verschieden von Magnesiumhydroxid. Das als Komponente b) einzusetzende Magnesiumhydroxid hat einen durch Röntgenfluoreszenz (XRF) an geglühter Substanz gemäß ISO 12677 zu bestimmenden Silicium-Anteil < 15000 ppm, bevorzugt < 5000 ppm und besonders bevorzugt < 500 ppm.

Bevorzugt hat das erfindungsgemäß einzusetzende Magnesiumhydroxid eine Reinheit, d.h. einen $Mg(OH)_2$-Anteil, von mindestens 96 Gew-%, bevorzugt mindestens 98 Gew-%.

Schließlich hat das erfindungsgemäß einzusetzende Magnesiumhydroxid in einer bevorzugten Ausführungsform zusätzlich zum Siliciumgehalt und/oder zusätzlich zum Reinheitsgrad einen durch Röntgenfluoreszenz (XRF) an geglühter Substanz gemäß ISO 12677 zu bestimmenden Eisengehalt (Fe) < 1500 ppm, bevorzugt < 1000 ppm, besonders bevorzugt < 300 ppm.

Insbesondere ist das Magnesiumhydroxid nicht-mineralischen, also synthetischen Ursprungs. Als Verfahren zur Herstellung der Komponente b) synthetischen Ursprungs kommen vorzugsweise die Pyrohydrolyse wässriger Magnesiumchloridlösungen oder die Fällung von Magnesiumsalzlösungen mit gebranntem und gelöschtem Dolomit oder Kalkmilch in Betracht.

Als Komponente b) einzusetzendes Magnesiumhydroxid kann unbeschlichtet oder aber mit einer Schlichte versehen sein. Eine Schlichte ist eine Imprägnierflüssigkeit, die durch Sprühen oder Tauchen vor der Weiterverarbeitung einer Komponente, hier dem Magnesiumhydroxid, aufgebracht wird, um das Eigenschaftsprofil oder die Verarbeitung einer Komponente zu verbessern. Vorzugsweise wird Komponente b) mit Schlichten auf Basis von Stearaten oder Aminosiloxanen, besonders bevorzugt mit Aminosiloxanen versehen.

Vorzugsweise als Komponente b) einzusetzendes Magnesiumhydroxid hat eine mittlere Teilchengröße d50 im Bereich von 0,5 μm bis 6 μm, wobei ein d50 im Bereich von 0,7 μm bis 3,8 μm bevorzugt und ein d50 im Bereich von 1,0 μm bis 2,6 μm besonders bevorzugt ist. Geeignete Messverfahren zur Bestimmung des d50 ist z. B. die Laserbeugung zum Beispiel gemessen mit einem Malvern Mastersizer 2000. Die gewünschten Teilchengrößen können beispielsweise durch das Mahlen von Magnesiumhydroxid erzielt werden. Bezüglich der mittleren Teilchengrößen in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50 % der Partikelmenge liegen (Medianwert) liegen. Erfindungsgemäß bestimmt wird der d50-Wert der Komponente b) durch Laserbeugung (Lichtstreuung) gemäß ISO 13320 nach Dispergierung in Wasser gemäß ISO 14887. Alternative Dispergiermittel werden im White Paper "Dispersing Powders in Liquid for Particle Size Analysis" der Horiba Instruments Inc, Albany, New York, 2013, Tabelle 2 beschrieben.

Erfindungsgemäß geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

**Komponente c)**

Die als Komponente c) einzusetzenden **Bornitride** [CAS Nr. 10043-11-5] haben bezogen auf die Primärpartikel bevorzugt eine mittlere Teilchengröße (d50) im Bereich von 0,5 μm bis 100 μm, wobei eine mittlere Teilchengröße im Bereich von 2 μm bis 50 μm bevorzugt ist und eine mittlere Teilchengröße im Bereich von 5 μm bis 20 μm besonders bevorzugt ist. Die mittlere Teilchengrößen der Komponente c) werden im Rahmen der vorliegenden Erfindung mittels Laserbeugung in Dispersion gemäß an ISO 13320 ermittelt.

Das Bornitrid wird vorzugsweise direkt in Form von Plättchen (engl. "Platelets") oder in Form von Agglomeraten eingesetzt werden, wobei der Einsatz von Plättchen besonders bevorzugt ist.

Wie Komponente b) kann auch Komponente c) sowohl unbeschlichtet als auch oberflächenmodifiziert eingesetzt werden. Geeignete Bornitrid Qualitäten sind Beispielsweise Bornitrid BT BN006-HM und/oder Bornitrid BT BN012-TCP der Firma RD Consulting, Oberscheinfeld, Deutschland.

**Komponente d)**

Das als Komponente d) einzusetzende **Titandioxid** [CAS Nr. 13463-67-7] hat bevorzugt eine mittlere Teilchengröße im Bereich von 90 nm bis 2000 nm, besonders bevorzugt im Bereich von 200 nm bis 800 nm, zu bestimmen mittels Laserbeugung in Dispersion gemäß ISO 13320.

Für das erfindungsgemäß als Komponente d) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al-Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 %; beim SP-Grundkörper durch eine Dotierung bevorzugt mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte fotokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und / oder Zr und/oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und/oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Schlichten versehen, insbesondere mit Siloxanen oder Polyalkoholen.

Kommerziell erhältliche Produkte sind beispielsweise Kronos® 2230, Kronos® 2233 und Kronos® 2225 der Fa. Kronos, Dallas, USA. Das Titandioxid kann direkt als Pulver oder in Form von Masterbatchen eingesetzt werden, wobei im Falle von Masterbatchen die Masterbatche auf Basis von Polyamid bevorzugt sind. Alternativ können auch Titandioxid Masterbatche auf Basis von Polycarbonat, Polybutylenterephthalat, Polyethylen, Maleinsäureanhydrid-gepfropftem Polyethylen und/oder Maleinsäureanhydrid gepfropftem-Polypropylen verwendet werden, wobei auch eine Mischung der genannten Polymere für den Masterbatch verwendet werden kann.

**Komponente e)**

In einer Ausführungsform enthalten die erfindungsgemäßen Zusammensetzungen wenigstens einen **Thermostabilisator** aus der Gruppe der sterisch gehinderten Phenole enthaltend wenigstens eine Struktur der Formel (I),

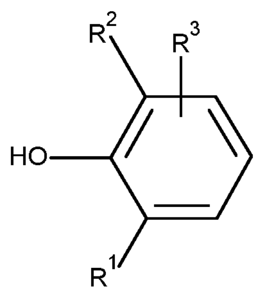

(I)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

Sterisch gehinderte und somit anspruchsvolle Gruppen im Sinne der vorliegenden Erfindung sind bevorzugt tert.-Butylgruppen, Isopropylgruppen und mit sterisch anspruchsvollen Gruppen substituierte Arylgruppen. Sterisch anspruchsvolle Gruppen im Sinne der vorliegenden Erfindung sind insbesondere tert.-Butylgruppen.

Ganz besonders bevorzugte Thermostabilisatorn der Formel (I) werden als Antioxidantien beispielsweise in der DE-A 27 02 661 (US-A 4 360 617) beschrieben, deren Inhalt von der vorliegenden Anmeldung vollumfänglich umfasst wird. Eine weitere Gruppe bevorzugter sterisch gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (II)

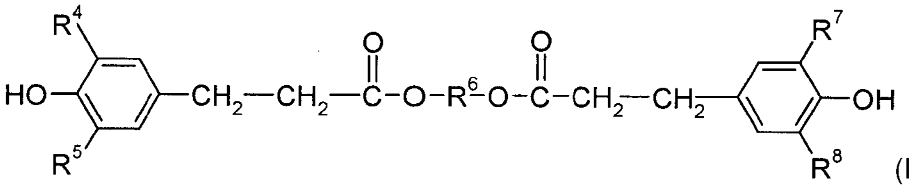

(II)

wobei $R^4$, $R^5$, $R^7$ und $R^8$ unabhängig voneinander $C_1$-$C_8$-Alkylgruppen darstellen, die ihrerseits substituiert sein können wovon mindestens eine davon eine sterisch anspruchsvolle Gruppe ist und $R^6$ einen zweiwertigen aliphatischen Rest mit 1 bis 10 C - Atomen bedeutet, der in der Hauptkette auch C-O-Bindungen aufweisen kann. Beispiele für Verbindungen der Formel (II) sind Verbindungen der Formeln (III), (IV) und (V).

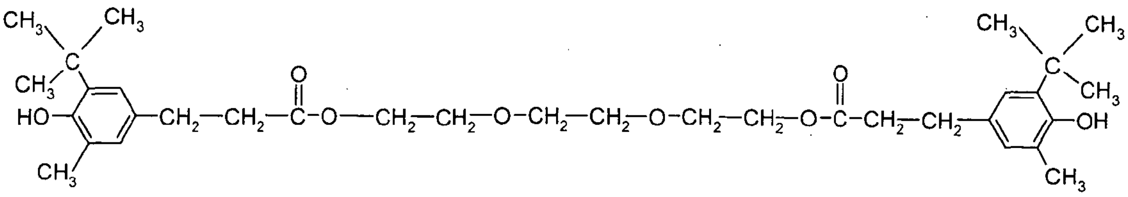

(III) (Irganox® 245 der Firma BASF SE)

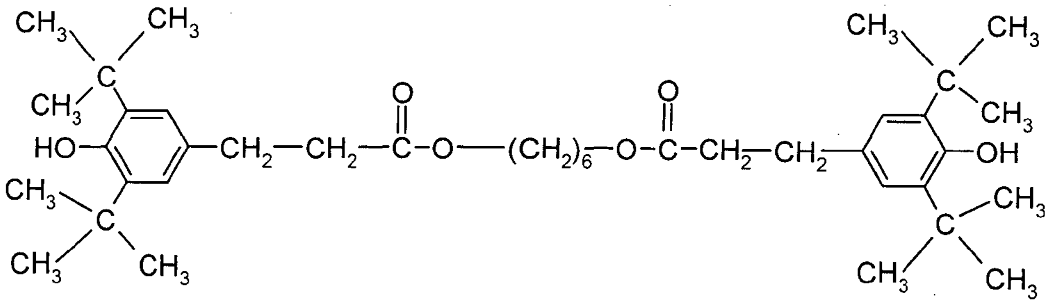

(IV) (Irganox® 259 der Firma BASF SE)

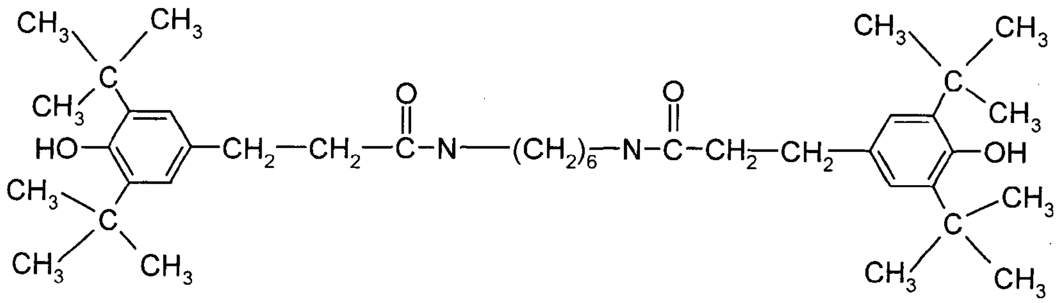

(V) (Irganox® 1098 der Firma BASF SE)

Ganz besonders bevorzugte Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Insbesondere bevorzugte Thermostabilisatoren werden ausgewählt aus der Gruppe 2,2'-Methylen-bis-(4-methyl-6-tert.-butylphenol), 1,6-Hexandiol-bis-[3-(3,5-di-tert.-butyl-4-hydroxyphenyl)-propionat] (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugt wird N,N'-Hexamethylen-bis-3,5-di-tert.-butyl-4-hydroxyhydrocinnamid [CAS No. 23128-74-7] als Thermostabilisator eingesetzt, das als Irganox® 1098 bei der BASF SE, Ludwigshafen, Deutschland erhältlich ist.

**Komponente f)**

In einer Ausführungsform enthalten die erfindungsgemäßen Zusammensetzungen wenigstens einen **Füllstoff** aus der Gruppe Glaskugeln, gemahlenes Glas, amorphe Kieselsäure, Calciumsilikat [CAS Nr. 1344-95-2], Calciummetasilikat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Glimmer [CAS Nr. 1318-94-1], Phlogopit [CAS Nr. 12251-00-2], Bariumsulfat [CAS Nr. 7727-43-7], Feldspat [CAS Nr. 68476-25-5] und Montmorillonit [CAS Nr. 67479-91-8].

Der als Komponente f) einzusetzende **Füllstoff** wird vorzugsweise oberflächenmodifiziert eingesetzt, besonders bevorzugt mit einem Haftvermittler bzw. Haftvermittlersystem, insbesondere bevorzugt auf Silanbasis. Dafür werden Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt. Die Vorbehandlung ist jedoch nicht unbedingt erforderlich.

Die als Komponente f) einzusetzenden Füllstoffe können bedingt durch die Verarbeitung, vorzugsweise bereits in der Compoundierung, zur Formmasse bzw. in der späteren Verarbeitung zum Formkörper/Erzeugnis in der Formmasse bzw. im Formkörper/Erzeugnis einen kleineren d50-Wert aufweisen, als die ursprünglich eingesetzten Füllstoffe.

In einer alternativen Ausführungsform können - sofern es der Bedarf erfordert und unter Berücksichtigung von Nachteilen durch Anisotropie bei der Schwindung - auch faserförmige oder nadelförmige Füllstoffe eingesetzt werden. Bevorzugt sind Kohlenstofffasern, insbesondere Kohlenstofffasern auf Basis Polyacrylnitril [CAS Nr. 308063-67-4], Wollastonit [CAS Nr. 13983-17-0] oder Glasfasern [CAS Nr. 65997-17-3].

Unter nadelförmigen mineralischen Füllstoffen wird erfindungsgemäß ein mineralischer Füllstoff mit stark ausgeprägtem nadelförmigen Charakter verstanden. Insbesondere seien nadelförmige Wollastonite genannt. Bevorzugt weist das Mineral ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße der nadelförmigen mineralischen Füllstoffe liegt bevorzugt bei < 20 μm, besonders bevorzugt bei < 15 μm, insbesondere bevorzugt bei < 10 μm bestimmt mit einem CILAS GRANULOMETER.

Im Falle eines Einsatzes von Glasfasern werden bevorzugt Glasfasern aus E-Glas eingesetzt. Die faserförmigen oder nadelförmigen Füllstoffe sind in einer bevorzugten Ausführungsform zur besseren Verträglichkeit mit der Komponente a) mit geeigneten Oberflächenmodifizierungen, insbesondere Oberflächenmodifizierungen enthaltend Silanverbindungen versehen.

Insbesondere bevorzugt werden in alternativer Ausführungsform als faserförmige Füllstoffe Glasfasern mit kreisförmiger Querschnittsfläche und einem Filament-Durchmesser im Bereich von 6 bis 18 μm, vorzugsweise 9 bis 15 μm, oder Glasfasern mit flacher Gestalt und nicht-kreisförmiger Querschnittsfläche eingesetzt, deren Hauptquerschnittsachse eine Breite im Bereich von 6 bis 40 μm und deren Nebenquerschnittsachse eine Breite im Bereich von 3 bis 20 μm aufweist, wobei für die Beurteilung der Zugehörigkeit eines Glasfaserproduktes zu diesem Dimensionsbereich die in den technischen Datenblättern der Glasfaser-Hersteller getroffenen Angaben heranzuziehen sind. Beispielhaft und insbesondere bevorzugt kann die Glasfaser CS7928 der Lanxess Deutschland GmbH (kreisförmiger Querschnitt, 11 μm mittlerer Durchmesser) eingesetzt werden. Querschnittsfläche bzw. Filament-Durchmesser werden im Rahmen der vorliegenden Erfindung mittels wenigstens eines optischen Verfahrens gemäß DIN 65571 bestimmt. Optische Verfahren sind a) Lichtmikroskop und Mikrometerokular (Distanzmessung Zylinderdurchmesser), b) Lichtmikroskop und Digitalkamera mit anschließender Planimetrie (Querschnittsmessung), c) Laserinterferometrie und d) Projektion.

Bei den Glasfasern unterscheidet man gemäß "http://de.wikipedia.org/wiki/Faser-Kunststoff-Verbund" geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Im Glasmehl liegt die Faserlänge im Bereich von 70 bis 200 μm.

Erfindungsgemäß können Kurzglasfasern, Langglasfasern oder Endlosglasfasern eingesetzt werden. Bevorzugt werden Langglasfasern oder Endlosglasfasern eingesetzt, besonders bevorzugt Langglasfasern. Die Glasfasern

können aber auch als gemahlene Glasfasern eingesetzt werden.

Die Glasfasern werden bevorzugt mit einem geeigneten Schlichtesystem bzw. einem Haftvermittler bzw. Haftvermittlersystem, besonders bevorzugt auf Silanbasis, ausgerüstet.

Ganz besonders bevorzugte Haftvermittler auf Silanbasis sind Silanverbindungen der allgemeinen Formel (VI)

$$(X\text{-}(CH_2)_q)_k\text{-}Si\text{-}(O\text{-}C_rH_{2r+1})_{4-k}$$

in der die Substituenten folgende Bedeutung haben:

X: $NH_2$-, HO-,

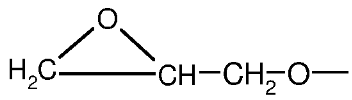

q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der in alternativer Ausführungsform einzusetzenden Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf die Glasfasermenge zur Oberflächenbeschichtung eingesetzt.

Die Glasfasern können bedingt durch die Verarbeitung/Compoundieren zur Formmasse bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse (Compoundierung) bzw. Formkörper (Spritzguss oder Extrusion) in der Formmasse bzw. im Formkörper kürzere Längenverteilungen als ursprünglich eingesetzt aufweisen.

**Komponente g)**

Als Komponente g) einzusetzende **Entformer** sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse. Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt.

Ganz besonders bevorzugt wird wenigstens ein Gleit- und/oder Entformungsmittel aus der Gruppe Ethylen-bis-stearylamid, Calciumstearat und Ethylenglycoldimontanat eingesetzt.

Insbesondere bevorzugt wird Calciumstearat [CAS No. 1592-23-0] oder Ethylen-bis-stearylamid [CAS No 110-30-5] eingesetzt. Insbesondere besonders bevorzugt wird Ethylen-bis-stearylamid (Loxiol® EBS von Emery Oleochemicals) eingesetzt.

**Komponente h)**

Übliche **Additive** der Komponente h) sind von den Komponenten b), c), d) e), f) und g) verschiedene Komponenten, bevorzugt Stabilisatoren, UV-Stabilisatoren, Gammastrahlenstabilisatoren, Laserabsorber, Antistatika, Fließhilfsmittel, Elastomermodifikatoren, Emulgatoren, Nukleierungsmittel, Säurefänger, Weichmacher, Gleitmittel, Farbstoffe, Lasermarkierungsadditive, Pigmente sowie Flammschutzmittel. Die Additive können alleine oder in Mischung bzw. in Form von Masterbatchen eingesetzt werden.

Als **Stabilisatoren** werden Phosphite, Hydrochinone, aromatische sekundäre Amine, insbesondere Diphenylamine, substituierte Resorcine, Salicylate, Citrate, Benzotriazole und Benzophenone, sowie verschieden substituierte Vertreter dieser Gruppen oder deren Mischungen eingesetzt.

In einer Ausführungsform werden als Stabilisatoren Kupferhalogenide, insbesondere Kupfer(I)iodid, eingesetzt. Bevorzugt erfolgt der Einsatz wenigstens eines Kupferhalogenids in Kombination mit wenigstens einem Alkalimetallhalogenid, vorzugsweise einem Chlorid, Bromid oder Iodid des Natriums oder Kaliums, insbesondere mit Kaliumiodid. Alternativ oder zusätzlich kann auch Natriumhypophosphit $NaH_2PO_2$, eingesetzt werden.

Als Stabilisatoren kann auch wenigstens ein mehrwertiger Alkohol, bevorzugt auszuwählen aus der Gruppe Dipentaerythritol [CAS-Nr. 126-58-9] und Tripentaerythritol [CAS-Nr. 78-24-0], eingesetzt werden, wobei Dipentaerythritol besonders bevorzugt ist. Diese mehrwertigen Alkohole können auch in Kombination mit den oben beschriebenen Stabilisatoren eingesetzt werden.

Als **Pigmente bzw. Farbstoffe** werden bevorzugt Zinksulfid, Ultramarinblau, Ruß, Phthalocyanine, Chinacridone, Perylene, Nigrosin und Anthrachinone eingesetzt.

Als **Nukleierungsmittel** werden bevorzugt Talkum, Natrium- oder Calciumphenylphosphinat eingesetzt, wobei Talkum besonders bevorzugt ist. Talkum ist ein in pulverisierter Form vorliegendes Magnesiumsilikathydrat, mit der chemischen Zusammensetzung $Mg_3[Si_4O_{10}(OH)_2]$, [CAS No. 14807-96-6].

Als **Säurefänger** werden bevorzugt Hydrotalcit, Kreide, Böhmit oder Zinkstannate eingesetzt.

**Als Weichmacher** werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als **Elastomermodifikator** einzusetzendes Additiv wird bevorzugt eines oder mehrere Pfropfpolymerisat(e) H von

H.1 5 bis 95 Gew.-%, vorzugsweise 30 bis 90 Gew.-%, wenigstens eines Vinylmonomeren auf

H.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage H.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere H.1 sind vorzugsweise Gemische aus

H.1.1 50 bis 99 Gew.-% Vinylaromaten und/oder kernsubstituierten Vinylaromaten, vorzugsweise Styrol, $\alpha$-Methylstyrol, p-Methylstyrol, p-Chlorstyrol, und/oder Methacrylsäure-($C_1$-$C_8$)-alkylester, vorzugsweise Methylmethacrylat, Ethylmethacrylat, und

H.1.2 1 bis 50 Gew.-% Vinylcyanide, vorzugsweiseungesättigte Nitrile wie Acrylnitril und Methacrylnitril, und/oder (Meth)Acrylsäure-($C_1$-$C_8$)-alkylester, vorzugsweise Methylmethacrylat, n-Butylacrylat, t-Butylacrylat, und/oder Derivate, vorzugsweise Anhydride und Imide, ungesättigter Carbonsäuren, vorzugsweise Maleinsäureanhydrid und N-Phenyl-Maleinimid.

Bevorzugte Monomere H.1.1 sind ausgewählt aus mindestens einem der Monomere Styrol, $\alpha$-Methylstyrol und Methylmethacrylat, bevorzugte Monomere H.1.2 sind ausgewählt aus mindestens einem der Monomere Acrylnitril, Maleinsäureanhydrid und Methylmethacrylat.

Besonders bevorzugte Monomere sind H.1.1 Styrol und H.1.2 Acrylnitril.

Für die in den Elastomermodifikatoren einzusetzenden Pfropfpolymerisate geeignete Pfropfgrundlagen H.2 sind bevorzugt Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen H.2 sind Dienkautschuke, insbesondere auf Basis von Butadien, Isopren etc., oder Gemische von Dienkautschuken oder Copolymerisate von Dienkautschuken oder deren Gemischen mit weiteren copolymerisierbaren Monomeren (z. B. gemäß H.1.1 und H.1.2), mit der Maßgabe, dass die Glasübergangstemperatur der Komponente H.2 unterhalb <10°C, vorzugsweise <0°C, besonders bevorzugt <-10°C liegt. Besonders bevorzugt ist als Pfropfgrundlage H.2 reiner Polybutadienkautschuk.

Besonders bevorzugte Pfropfpolymerisate H sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind.

Der Gelanteil der Pfropfgrundlage H.2 beträgt mindestens 30 Gew.-%, vorzugsweise mindestens 40 Gew.-% (in Toluol gemessen). ABS bedeutet Acrylnitril-Butadien-StyrolCopolymerisat [CAS Nr. 9003-56-9] und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate H werden durch radikalische Polymerisation, z. B. durch Emulsions-, Suspensions-, Lösungs- oder Massepolymerisation, vorzugsweise durch Emulsions- oder Massepolymerisation hergestellt. Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage

aufgepfropft werden, werden erfindungsgemäß unter Pfropfpolymerisaten H auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen H.2 die vorzugsweise Polymerisate aus Acrylsäurealkylestern, gegebenenfalls mit bis zu 40 Gew.-%, bezogen auf H.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Vertreter für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, insbesondere Ethylenglykoldimethacrylat, Allylmethacrylat; mehrfach ungesättigte heterocyclische Verbindungen, insbesondere Trivinyl- und Triallylcyanurat; polyfunktionelle Vinylverbindungen, insbesondere Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage H.2.

Bei cyclischen vernetzenden Monomeren mit mindestens 3 ethylenisch ungesättigten Gruppen ist es vorteilhaft, die Menge auf unter 1 Gew.-% der Pfropfgrundlage H.2 zu beschränken.

Bevorzugte "andere" polymerisierbare, ethylenisch ungesättigte Monomere, die neben den Acrylsäureestern gegebenenfalls zur Herstellung der Pfropfgrundlage H.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage H.2 sind Emulsionspolymerisate, die einen Gelgehalt von mindestens 60 Gew.-% aufweisen.

Weitere geeignete Pfropfgrundlagen gemäß H.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Bei **Laserabsorbern** handelt es sich gemäß Kunststoffe 8, 2008, 119-121 um Laserlicht Absorber, bevorzugt zum Beschriften von Kunststofferzeugnissen. Bevorzugte Laserabsorber werden ausgewählt aus der Gruppe Antimontrioxid, Zinnoxid, Zinnorthophosphat, Bariumtitanat, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis Polyamid oder solche auf Basis Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6 basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge zwischen 157 nm und 10,6 $\mu$m. Beispiele für Laser dieser Wellenlängen sind in WO2009/003976 A1 beschrieben. Bevorzugt werden Nd:YAG laser, mit denen Wellenlängen von 1064, 532, 355 und 266 nm realisiert werden können und $CO_2$-Laser eingesetzt.

Bevorzugte weitere **Flammschutzmittel** verschieden von Komponente b) sind mineralische Flammschutzmittel, stickstoffhaltige Flammschutzmittel oder phosphorhaltige Flammschutzmittel.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, Melamincyanurat und Kondensationsprodukte des Melamins wie z. B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive wie Aluminiumhydroxid, Ca-Mg-Carbonat-Hydrate (z. B. DE-A 4 236 122) eingesetzt werden.

In Frage kommen ferner Flammschutzmittelsynergisten aus der Gruppe der sauerstoffstickstoff- oder schwefelhaltigen Metallverbindungen, wobei zinkfreie Verbindungen aus den oben genannten Gründen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen besonders bevorzugt sind.

In einer alternativen Ausführungsform können als Komponente h) aber auch - sofern es der Bedarf erfordert -

zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

In einer alternativen Ausführungsform können als Komponente h) aber auch - sofern der Bedarf es erfordert unter Berücksichtigung der Nachteile durch den Verlust der Halogenfreiheit - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Bevorzugte phosphorhaltige Flammschutzmittel sind organische Metallphosphinate wie z. B. Aluminium-tris(diethylphosphinat), Aluminiumphosphonat, roter Phosphor, anorganische Metallhypophosphite, insbesondere Aluminiumhypophosphit, Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat und, sofern es der Bedarf erfordert, Melaminpolyphosphat, ferner Melamin-poly(aluminiumphosphat), Melamin-poly(zinkphosphat) oder Phenoxyphosphazenoligomere und deren Mischungen.

Weitere als Komponente h) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente h) einzusetzenden Flammschutzmittel können in Reinform, sowie über Masterbatche oder Kompaktate zugesetzt werden.

Die erfindungsgemäßen Zusammensetzungen bzw. die aus diesen herzustellenden Formmassen und Erzeugnisse zeichnen sich durch eine sehr gute Flammwidrigkeit nach UL94 und der Glühdrahtprüfung (GWFI) bei gleichzeitig hoher Wärmeleitfähigkeit, verzugsarmer Schwindung und hinreichender Mechanik aus.

Unter einer sehr guten Flammwidrigkeit im Sinne der vorliegenden Erfindung wird eine UL94-Klassifizierung von V-0 bei einer Wandstärke kleiner oder gleich 1,5 mm und ein GWFI-Wert gleich oder oberhalb von 850 °C bei einer Wandstärke kleiner oder gleich 1,5 mm verstanden. Unter einer hohen Wärmeleitfähigkeit wird erfindungsgemäß eine thermische Leitfähigkeit größer als 1,0 W/(m•K) bei Messung senkrecht zur Fließrichtung des Probekörpers (engl.: "trough plane") und eine thermische Leitfähigkeit größer oder gleich 2,0 W/(m•K) bei Messung in Fließrichtung des Probekörpers (engl.: "in-plane").

Die Wärmeleitfähigkeit wird dabei nach dem Wärmepuls-Verfahren (Engl.: "Laserflash"-Verfahren) gemäß EN821-2 unter Verwendung eines Netzsch LFA447 Nanoflash® - Gerätes gemessen.

Nach dem (Spritz)Gießen verkleinern sich Kunststoff basierte Erzeugnisse beim Abkühlen auf Grund der Volumenänderung bei der Kristallisation und der Wärmedehnung um einen bestimmten Prozentsatz ihres Volumens, eine sogenannte Schwindung findet statt. Gemäß "http://de.wikipedia.org/wiki/Schwindung#Schwindung_bei_Gie.C3.9Fharzen" ist Schwindung die Volumenänderung eines Materials oder Werkstückes, ohne dass Material entfernt oder Druck ausgeübt wird. Bei Kunststoffen entsteht die Schwindung durch eine zunehmende Kristallisation, die eine lokale Dichteerhöhung bewirkt. Das Fehlen bzw. die Reduktion des Volumens bei gleicher Gestalt wird dann als Schwindung bezeichnet. Schwindung findet durch Trocknung, Abkühlung oder chemische bzw. physikalische Umbaumechanismen im Material statt. Eine geringe Schwindung bei Gießharzen auf Basis von Thermoplasten ist ein Qualitätskriterium, da ansonsten Einbauten unter Druckspannung geraten können und zu anderen zu benetzenden Teilen Spalte entstehen können, wenn die Haftung nicht ausreicht. Bei Spritzgusserzeugnissen der Elektrotechnik/Elektronik kann die Schwindung zum Eindringen von Feuchtigkeit und zu verringerter Spannungsfestigkeit führen. Unter isotroper Schwindung versteht der Fachmann eine Schwindung, die in alle Raumrichtungen hin gleich ist.

Vorzugsweise zeichnen sich erfindungsgemäße Erzeugnisse durch eine in alle Raumrichtungen verzugsarme, also eine isotrope, Schwindung aus. Unter isotroper Schwindung wird erfindungsgemäß eine Schwindung am Erzeugnis verstanden, bei der der Quotient aus Verarbeitungsschwindung parallel zur Spritzrichtung und Verarbeitungsschwindung senkrecht zur Spritzrichtung oberhalb von 0,8, bevorzugt oberhalb von 0,9 liegt.

Die Bestimmung der Verarbeitungsschwindung, jeweils parallel und senkrecht zur Spritzrichtung, wird erfindungsgemäß nach ISO 294-4 an Probekörpern der Abmessung 60 mm • 60mm • 2mm bei einer Massetemperatur von 260°C und einer Werkzeugtemperatur von 80°C bei 600bar Nachdruck bestimmt.

Unter hinreichender Mechanik wird erfindungsgemäß bevorzugt eine Biegefestigkeit von ≥ 100 MPa, bevorzugt ≥ 120 MPa, und eine Randfaserdehnung ≥ 1,0 %, bevorzugt ≥ 1,2 %, verstanden.

Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzzeit-Biegeversuch nach ISO 178 werden balkenförmige Probekörper, vorzugsweise mit den Abmessungen 80 mm • 10 mm • 4mm, an den Enden auf zwei Aufleger gelegt und in der Mitte mit einem Biegestempel belastet (Bodo Carlowitz:

Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Der Biegemodul berechnet sich bei einer Flachprobe dann wie folgt:

$$E = l_v^3(X_H - X_L) / 4\ D_L ba^3$$

wobei die einzelnen Parameter folgende Bedeutungen haben:

$E$ = Biegemodul in $kN/mm^2$;
$l_v$ = Stützweite in mm;
$X_H$ = Ende der Biegemodulermittlung in kN;
$X_L$ = Beginn der Biegemodulermittlung in kN;
$D_L$ = Durchbiegung in mm zwischen $X_H$ und $X_L$;
$b$ = Probenbreite in mm;
$a$ = Probendicke in mm.

Aus den ermittelten Kräften und Durchbiegungen werden die Kennwerte für die Biegespannung und die Randfaserdehnung errechnet. (Bodo Carlowitz: Tabellarische Übersicht über die Prüfung von Kunststoffen, 6. Auflage, Giesel-Verlag für Publizität, 1992, S. 16-17).

Für die sichere Auslegung von Formteilen und Erzeugnissen aus Kunststoffen, die einer Langzeitbelastung unterliegen, werden Werkstoffkenngrößen bei ruhender Belastung benötigt, die hierzu gesicherte Aussagen ermöglichen. Langzeituntersuchungen können unter Zug-, Druck- und Biegebeanspruchung durchgeführt werden, wobei die Variation von Beanspruchungszeit und -temperatur zu berücksichtigen ist. Des Weiteren können umgebende Medien einen entscheidenden Einfluss auf die Eigenschaften ausüben.

Die Bestimmung des Kriechverhaltens bei Dreipunktbiegebelastung erfolgt nach DIN EN ISO 899-2. Zu verwenden sind Prüfkörper mit den Abmessungen Länge 80 mm, Breite 10 mm und Dicke 4 mm entsprechend der DIN EN ISO 178.

Im Unterschied zum Kurzzeitbiegeversuch wird zur Berechnung der Randfaserdehnung $\varepsilon_f$ (t) die zeitliche Änderung der Durchbiegung $f_b$ (t) im Zeitstand-Biegeversuch bei Dreipunkt-Belastung gemäß DIN EN ISO 899-2/A1: 2012-03 herangezogen (siehe: http://wiki.polymerservice-merseburg.de/index. php/Zeitstandbiegeversuch).

Der GWFI Wert wird durch Glühdrahtprüfungen an Enderzeugnissen und Werkstoffen gemäß IEC 60695-2-12 ermittelt. Der Versuchsablauf beim GWFI Test ist wie folgt: Die Proben werden in 50 °C-Schritten von 500 bis 900°C und bei 960°C für 30 s dem Glühdraht ausgesetzt. Die Probe wird bei einer Temperatur als flammwidrig eingestuft, wenn die Nachbrennzeit nach dem Zurückziehen des Glühdrahtes kleiner als 30 s ist.

Die Vorschrift **UL94** "*Tests for Flammability of Plastic Materials for Parts in Devices and Applications"* (Tests zur Brennbarkeit von Kunststoffen für Teile in Geräten und Anwendungen) der Underwriters Laboratories (UL) beschreibt ein Verfahren zur Beurteilung und Klassifizierung der Brennbarkeit von Kunststoffen. Sie wurde inhaltsgleich in die Normen IEC/DIN EN 60695-11-10 und -20 übernommen. Für die Klassifizierung werden Probekörper der Abmessungen 125 • 13 • S $mm^3$ hergestellt. Die Dicke S muss dabei der kleinsten Wandstärke in der vorgesehenen Anwendung entsprechen und darf maximal 13 mm betragen. Häufig wird in einer oder mehrerer der Rasterstufen 0.40 mm, 0.75 mm, 1.5 mm und 3.0 mm geprüft. Die Tests werden mit offener Flamme (Bunsenbrenner) durchgeführt. Die Zündquelle weist eine Leistung von 50 Watt (ca. 20 mm hohe Flamme) auf. Sie wirkt bei der HB-Prüfung 30 s oder bis zum Erreichen der Startmarke und bei der V-Prüfung zweimal 10 s auf den Probekörper ein und wird anschließend wieder entfernt. Dabei werden die Brennzeit und bei den V-Prüfungen auch das Abfallen brennender Teile mit Hilfe eines Wattebausches, welcher sich unter dem Probekörper befindet, bewertet. Die Klassifizierung erfolgt für die geprüfte Probekörperdicke in die Stufen HB (Horizontalbrennprüfung) sowie V-0, V-1, V-2, (Vertikalbrennprüfung). Diese stehen - geordnet nach der Höhe der Anforderung - im Einzelnen für:

- *HB*: langsames Brennen einer horizontal eingespannten Probe (Selbstverlöschen oder bei Dicke <3 mm; Rate <75 mm/min (HB75); bei Dicke 3 bis 13 mm; Rate <40 mm/min (HB40)).
- V-2: Verlöschen einer vertikal eingespannten Probe innerhalb von 30 Sekunden. Brennendes Abtropfen von Kunststoffschmelze zulässig.
- V-1: wie V-2, jedoch kein brennendes Abtropfen von Kunststoffschmelze zulässig. Maximal 60 Sekunden Nachglimmen.
- V-0: wie V-1, jedoch Verlöschen der Flamme innerhalb von 10 Sekunden. Maximal 30 Sekunden Nachglimmen.

In bevorzugter Ausführungsform betrifft die vorliegende Erfindung Zusammensetzungen enthaltend Polyamid 6, Magnesiumhydroxid, Bornitrid und Ethylen-bis-stearylamid.

In bevorzugter Ausführungsform betrifft die vorliegende Erfindung Zusammensetzungen enthaltend Polyamid 6, Magnesiumhydroxid, Bornitrid und 1,6-Bis[3-(3,5-di-tert-butyl-4-hydroxyphenyl)propionylamino]-hexan.

In bevorzugter Ausführungsform betrifft die vorliegende Erfindung Zusammensetzungen enthaltend Polyamid 6, Magnesiumhydroxid, Bornitrid und Talkum.

In bevorzugter Ausführungsform betrifft die vorliegende Erfindung Zusammensetzungen enthaltend Polyamid 6, Magnesiumhydroxid, Bornitrid, Ethylen-bis-stearylamid und Talkum.

In bevorzugter Ausführungsform betrifft die vorliegende Erfindung Zusammensetzungen enthaltend Polyamid 6, Magnesiumhydroxid, Bornitrid und Ethylen-bis-stearylamid und 1, 6-Bis[3-(3,5-di-tert-butyl-4-hydroxyphenyl)propionylamino]-hexan.

**Verfahren**

Ferner ist Gegenstand der vorliegenden Erfindung ein Verfahren zur Herstellung erfindungsgemäßer Zusammensetzungen in Form von Formmassen und daraus herzustellender Erzeugnisse, indem man die Komponenten a), b) und c) sowie gegebenenfalls noch wenigstens einen Vertreter der Komponenten d), e), f), g) und h), in wenigstens einem Mischwerkzeug mischt, zu einer Formmasse in Form eines Strangs austrägt, bis zur Granulierfähigkeit abkühlt und granuliert und als Matrixmaterial einem Spritzguss, einem Blasformvorgang oder einer Extrusion unterzieht. Vorzugsweise wird in der Weise gemischt, dass auf 100 Gewichtsteile der Komponente a) 100 bis 280 Gewichtsteile von Komponente b) und 10 bis 150 Gewichtsteile von Komponente c) eingesetzt werden.

Vorzugsweise geschieht das Mischen der Komponenten bei Temperaturen im Bereich von 220 bis 400°C durch gemeinsames Vermengen, Vermischen, Kneten, Extrudieren oder Verwalzen. Bevorzugte Mischwerkzeuge sind auszuwählen aus Compounder, gleichläufigen Zweiwellenextruder oder Buss-Kneter. Es kann vorteilhaft sein, einzelne Komponenten vorzumischen. Als Compound werden Gemische aus Grundstoffen bezeichnet, denen zusätzliche Füllstoffe, Verstärkungsstoffe oder andere Additive beigemischt worden sind. Eine Lösung der einzelnen Grundstoffe untereinander findet dabei nicht statt. Durch die Compoundierung werden somit mindestens zwei Stoffe miteinander zu einer homogenen Mischung verbunden. Ziel der Compoundierung ist es, die Eigenschaften der Grundstoffe auf einen Anwendungsfall hin zu modifizieren. Als besondere Herausforderung gilt es, eine über die Zeit mögliche Entmischung des Compounds zu vermeiden. Den Vorgang zum Herstellen eines Compounds nennt man Compoundierung.

Nach dem Mischen werden als Formmassen vorliegende Zusammensetzungen dann vorzugsweise zu einem Strang ausgetragen, bis zur Granulierfähigkeit abkühlt und granuliert. In einer Ausführungsform wird das Granulat, das die erfindungsgemäße Zusammensetzung enthält, getrocknet, bevorzugt bei Temperaturen im Bereich von 110 bis 130°C, besonders bevorzugt um 120°C, im Vakuumtrockenschrank oder im Trockenlufttrockner, vorzugsweise für eine Zeitdauer im Bereich von bis zu 2h, bevor es als Matrixmaterial einem Spritzguss, einem Blasformvorgang oder einem Extrusionsverfahren zur Herstellung erfindungsgemäßer Erzeugnisse unterzogen wird.

Die vorliegende Erfindung betrifft deshalb auch ein Verfahren zur Herstellung von Erzeugnissen indem erfindungsgemäße Zusammensetzungen vermischt, zu einer Formmasse in Form eines Strangs ausgetragen, bis zur Granulierfähigkeit abgekühlt und granuliert und als Matrixmaterial einem Spritzguss, einem Blasformvorgang oder einer Extrusion, bevorzugt einem Spritzguss unterzogen werden.

Es kann vorteilhaft sein, sogenannte Halbzeuge aus einer bei Raumtemperatur, vorzugsweise bei einer Temperatur im Bereich von 0 bis 40°C, hergestellten physikalischen Mischung, einem sogenannten Dryblend, vorgemischter Komponenten und/oder einzelner Komponenten direkt herzustellen. Halbzeuge im Sinne der vorliegenden Erfindung sind vorgefertigte Gegenstände und entstehen in einem ersten Schritt im Herstellungsprozess eines Erzeugnisses. Halbzeuge im Sinne der vorliegenden Erfindung sind keine Schüttgüter, Granulate oder Pulver, weil es sich, anders als bei Halbzeugen, nicht um geometrisch bestimmte, feste Körper handelt und damit noch keine "Halb-Fertigstellung" des finalen Erzeugnisses erfolgt ist. Siehe:http://de.wikipedia.org/wiki/Halbzeug.

Die Verfahren des Spritzgusses, des Blasformens sowie der Extrusion thermoplastischer Formmassen sind dem Fachmann bekannt.

Erfindungsgemäße Verfahren zur Herstellung von Polyamid basierten Erzeugnissen durch Extrusion oder Spritzguss werden vorzugsweise bei Schmelzetemperaturen im Bereich von 240 bis 330°C, besonders bevorzugt im Bereich von 260 bis 310°C, ganz besonders bevorzugt im Bereich von 270 bis 300°C sowie gegebenenfalls zusätzlich bei Drücken von vorzugsweise maximal 2500 bar, besonders bevorzugt bei Drücken von maximal 2000 bar, ganz besonders bevorzugt bei Drücken von maximal 1500 bar und insbesondere bevorzugt bei Drücken von maximal 750 bar durchgeführt.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch

erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Das Blasformen (siehe: http://de.wikipedia.org/wiki/Blasformen) ist ein Verfahren zur Herstellung von Hohlkörpern aus thermoplastischen Kunststoffen und zählt zu den Spritzgießsonderverfahren. Zum Blasformen wird ein sogenannter Vorformling benötigt, welcher in einem vorangeschalteten Arbeitsschritt durch konventionelles Spritzgießen hergestellt wird. Beim eigentlichen Blasformverfahren wird dieser Vorformling im ersten Prozessschritt aufgeheizt. Hierbei kommen vor allem Infrarot-Strahler zum Einsatz, da sie neben einer guten Automatisierbarkeit eine hohe Leistungsfähigkeit besitzen und viel Wärmeenergie in das Halbzeug bringen. Nach dem Erwärmen wird der Vorformling in das Werkzeug gefahren, alternativ werden die Heizer - je nach Maschinenbauart - aus dem Werkzeug gefahren. Durch das Schließen des Werkzeugs kommt es am Flaschenhals zur Längsverstreckung, wodurch der Vorformling axial gehalten wird und zudem eine mediendichte Fixierung entsteht. Daraufhin wird ein Gas in den Vorformling eingeleitet, der sich unter der Druckbeanspruchung ausdehnt und dabei die Werkzeugkontur abbildet. Aus wirtschaftlichen und ökologischen Aspekten wird als Gas häufig Druckluft eingesetzt. Nach dem Aufblasen kühlt der erzeugte Hohlkörper im Werkzeug ab, bis er genügend Formsteifigkeit besitzt und ausgeworfen werden kann.

Die erfindungsgemäß aus den Formmassen herzustellenden Erzeugnisse können bevorzugt für Anwendungen

eingesetzt werden, für die ein hoher Flammschutz bei gleichzeitig hohen mechanischen Kennwerten erforderlich ist vorzugsweise in der Kraftfahrzeug-, Elektro-, Elektronik-, Telekommunikations-, Solar-, Informationstechnologie-, Computer-Industrie, im Haushalt, Sport, in der Medizin oder in der Unterhaltungsindustrie, besonders bevorzugt in Komponenten für strom- und spannungsführende Bauteile, insbesondere in Haushaltsgeräten und LED-Anwendungen.

Die vorliegende Erfindung betrifft deshalb auch die Verwendung thermoplastischer Formmassen enthaltend die oben genannten Zusammensetzungen zur Herstellung von Erzeugnissen mit erhöhtem Flammschutz bei gleichzeitig hohen mechanischen Kennwerten.

In einer Ausführungsform handelt es sich bei den erfindungsgemäß herzustellenden Erzeugnissen um Halbzeuge in Form thermostabilisierter Composites auf Basis von Endlosfasern, auch als Organobleche bezeichnet, aber auch um umspritzte oder überspritzte Composite Strukturen. Die erfindungsgemäßen Zusammensetzungen bzw. das erfindungsgemäße Thermostabilisatorsystem kann entweder in der Thermoplastmatrix der Composite Struktur oder in der zu verspritzenden Formmasse oder in beiden Komponenten eingesetzt werden bzw. darin enthalten sein. Thermostabilisierte Composites sind beispielsweise aus WO 2011 / 014754 A1 bekannt, überspritzte Composite Strukturen werden beispielsweise in der WO 2011 / 014751 A1 beschrieben.

Die Erfindung betrifft ferner die Verwendung der erfindungsgemäßen Zusammensetzungen zur Herstellung erfindungsgemäßer Erzeugnisse in Form von Fasern, Folien, Formkörpern, Composite Strukturen sowie überspritzte Composite Strukturen. Die Erzeugnisse in Form von Fasern, Folien, Formkörpern Composite Strukturen oder überspritzten Composite Strukturen wiederum finden als Halbzeuge Anwendung in Artikeln für die Kraftfahrzeug-, Elektro-, Elektronik-, Telekommunikations-, Informationstechnologie-, Solar-, Computerindustrie, für den Haushalt, für den Sport, für medizinische Anwendungen, für die Unterhaltungsindustrie oder in LED-Anwendungen.

Die vorliegende Erfindung betrifft zudem die Verwendung erfindungsgemäßer Zusammensetzungen als Formmassen zur Herstellung von Erzeugnissen in Form von Fasern, Folien, Formkörpern und als Matrixmaterial zur Herstellung von Composite Strukturen sowie überspritzten Composite Strukturen. Vorzugsweise werden diese eingesetzt als Halbzeuge und diese wiederum vorzugsweise zur Herstellung von Erzeugnissen bzw. Komponenten für strom- und spannungsführende Bauteile, vorzugsweise in Haushaltsgeräten und LED-Anwendungen.

Die vorliegende Erfindung betrifft aber auch ein Verfahren zur flammfesten Ausrüstung von als Komponente a) einzusetzenden Polyamiden und daraus herzustellender Erzeugnisse in Form von Fasern, Folien, Formkörpern, Composite Strukturen sowie überspritzten Composite Strukturen, indem man ein Stabilisatorsystem aus als Komponente b) einzusetzendem Magnesiumhydroxid mit einem Si-Gehalt < 15000 ppm und als Komponente c) einzusetzendem Bornitrid einsetzt, wobei auf 100 Gewichtsteile der Komponente a) 100 bis 280 Gewichtsteile der Komponente b) und 10 bis 150 Gewichtsteile von Komponente c) eingesetzt werden, vorzugsweise ein Stabilisatorsystem aus Magnesiumhydroxid mit einem Si-Gehalt < 15000 ppm, Bornitrid und Titandioxid oder ein Stabilisatorsystem aus Magnesiumhydroxid mit einem Si-Gehalt < 15000 ppm , Bornitrid und wenigstens einem Thermostabilisator aus der Gruppe der sterisch gehinderten Phenole enthaltend wenigstens eine Struktur der Formel (I).

Die vorliegende Anmeldung betrifft aber auch ein Verfahren zur flammfesten Ausrüstung von als Komponente a) einzusetzenden Polyamiden bzw. daraus herzustellender Erzeugnisse in Form von Folien, Fasern, Formkörpern, Composite Strukturen sowie überspritzte Composite Strukturen, indem man ein Stabilisatorsystem aus als Komponente b) einzusetzendem Magnesiumhydroxid mit einem Si-Gehalt < 15000 ppm und als Komponente c) einzusetzendem Bornitrid einsetzt, wobei auf 100 Gewichtsteile der Komponente a) 100 bis 280 Gewichtsteile der Komponente b) und 10 bis 150 Gewichtsteile von Komponente c) eingesetzt werden, vorzugsweise ein Stabilisatorsystem aus Magnesiumhydroxid mit einem Si-Gehalt < 15000 ppm, Bornitrid und Titandioxid oder ein Stabilisatorsystem aus Magnesiumhydroxid mit einem Si-Gehalt < 15000 ppm , Bornitrid und wenigstens einen Thermostabilisator aus der Gruppe der sterisch gehinderten Phenole enthaltend wenigstens eine Struktur der Formel (I).

## Beispiele:

Die in Tabelle 1 genannte Komponente wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.

Anschließend wurde das Granulat auf einer Spritzgieß-Maschine vom Typ Arburg A470 bei Massetemperaturen zwischen 270 und 290°C und Werkzeugtemperaturen im Bereich von 80 bis 100°C zu Prüfkörpern der Größe 125 mm • 13mm • 1,5mm für die Prüfungen nach UL94, Prüfkörper der Größe 60 mm • 45mm • 2,0 mm für die Herstellung der Probekörper für die Wärmeleitfähigkeitsmessung und Rundplatten mit einem Durchmesser von 80 mm und einer Dicke von 0,75 mm verarbeitet.

Die Flammwidrigkeit wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Prüfkörper hatten die Abmessung 125 mm • 13 mm • 1,5 mm.

Die Glühdrahtbeständigkeit wurde anhand der Glühdrahtprüfung GWFI (Glow-Wire Flammability-Index) gemäß IEC 60695-2-12 bestimmt.

Die Wärmeleitfähigkeit wurde nach dem Wärmepuls-Verfahren (Engl.: "Laserflash"-Verfahren) gemäß EN821-2 unter Verwendung eines Netzsch LFA447 Nanoflash®-Gerätes gemessen. Die Messung der Wärmeleitfähigkeit senkrecht zur Fließrichtung des Probekörpers ("trough plane") erfolgte dabei an Probekörpern der Abmessung 12,5 mm • 12,5 mm • 2 mm, wobei der Lichtpuls auf die Seite mit der Abmessung 12,5 mm • 12,5 mm auftritt. Die jeweiligen Probekörper wurden vorab aus einem Prüfkörper der Größe 60 mm • 45mm • 2,0 mm herausgefräst.

Die Messung der Wärmeleitfähigkeit in Fließrichtung des Probekörpers ("in plane") erfolgte an 6 dicht aneinandergereihten Probekörpern der Abmessung 12,5mm • 2 mm • 2 mm, welche jeweils aus einem Prüfkörper der Größe 60 mm • 45mm • 2,0 mm herausgefräst, dann 90° um die Längsachse gedreht und schließlich wieder so zusammengelegt wurden, dass der Lichtpuls wiederum auf eine resultierende Fläche von ca. 12 mm • 12,5 mm auftrat.

Die Bestimmung der Verarbeitungsschwindung, jeweils parallel und senkrecht zur Spritzrichtung, wurde dabei nach ISO 294-4 an Probekörpern der Abmessung 60 mm • 60 mm • 2 mm bei einer Massetemperatur von 260°C und einer Werkzeugtemperatur von 80°C bei 600bar Nachdruck bestimmt.

Als Maß für die Isotropie wurde anschließend der Verzug als Quotient aus Verarbeitungsschwindung parallel zur Spritzrichtung und Verarbeitungsschwindung senkrecht zur Spritzrichtung berechnet. In beiden Fällen wurden die zubereiteten Probekörper vor der Messung mit Hilfe eines Graphitsprays dünn mit Graphit beschichtet. Die Reflexion wurde mit einem Spektralphotometer (Konica Minolta CM-2600d) an Rundplatten mit 80 mm Durchmesser und 0,75 mm Dicke gemessen, wobei für die Beispiele der Wert bei 500 nm mit Glanzeinschluss herangezogen wurde.

Verwendete Materialien:

Komponente a/1: Polyamid 6 (Durethan® B26, Fa. Lanxess Deutschland GmbH, Köln, Deutschland)

Komponente b/1: Magnesiumhydroxid (Magnifin® 5HIV, Martinswerk GmbH, Bergheim, Deutschland)

Komponente c/1: Bornitrid (Bornitrid BT BN006-HM, RD Consulting, Oberscheinfeld, Deutschland)

Komponente g): Ethylen-bis-stearylamid [CAS Nr. 110-30-5] als Loxiol® EBS von Emery Oleochemicals

Weitere für die Verwendung in Polyamiden gebräuchliche Additive wie g) Nukleierungsmittel (z. B. auf Basis von Talkum) und/oder e) Thermostabilisatoren wie 1, 6-Bis[3-(3,5-di-tert-butyl-4-hydroxyphenyl)propionylamino]-hexan [CAS Nr. 23128-74-7] (Irganox® 1098, Fa. BASF, Ludwigshafen, Deutschland).

Die in Tabelle 1 dargestellten Zusammensetzungen wurden nach der oben beschriebenen Weise verarbeitet.

**Tabelle 1:**

| | | Bsp. 1 |
|---|---|---|
| a/1) | [Gew.-Teile] | 100 |
| b/1) | [Gew.-Teile] | 175 |
| c/1) | [Gew.-Teile] | 30,5 |
| g) | [Gew.-Teile] | 0,6 |
| e) und/oder h) | [Gew.-Teile] | 0,6 |
| UL94 (1,5mm) | Klasse | V-0 |
| GWFI (0,75 mm) | [°C] | 960 |
| Wärmeleitfähigkeit ["trough plane"] | [W/mK] | > 1,5 |
| Wärmeleitfähigkeit ["in plane"] | [W/mK] | > 3,0 |
| Biegefestigkeit | [MPa] | >120 |
| Randfaserdehnung | [%] | >1,2 |
| Isotropie der Schwindung [parallel/senkrecht] | | > 0,9 |

(fortgesetzt)

| | | Bsp. 1 |
|---|---|---|
| Reflektivität bei 500nm | [%] | >80 |

Tabelle 1 zeigt für erfindungsgemäße Zusammensetzungen bzw. aus diesen erhältliche Erzeugnisse (Bsp.1) bei hoher Wärmeleitfähigkeit und sehr guter Flammwidrigkeit nach UL94 und IEC60695-2-12 (GWF) zusätzlich noch eine weitgehend isotrope Schwindung und eine hinreichend gute Mechanik im Biegeversuch.

## Patentansprüche

1. Zusammensetzungen enthaltend

   a) Polyamid 6 oder Polyamid 66,
   b) Magnesiumhydroxid mit einem Si-Gehalt < 15000 ppm und
   c) Bornitrid, wobei auf 100 Gewichtsteile der Komponente a) 100 bis 280 Gewichtsteile von Komponente b) und 10 bis 150 Gewichtsteile von Komponente c) eingesetzt werden.

2. Zusammensetzungen gemäß Anspruch 1, **dadurch gekennzeichnet, dass** diese Komponente b) in einer Reinheit von mindestens 96 Gew.-% enthalten.

3. Zusammensetzungen gemäß Anspruch 1 oder 2, **dadurch gekennzeichnet, dass** Komponente b) zusätzlich einen Fe-Gehalt < 1500 ppm aufweist.

4. Zusammensetzungen gemäß einem der Ansprüche 1 bis 3, **dadurch gekennzeichnet, dass** diese zusätzlich d) Titandioxid enthalten.

5. Zusammensetzungen gemäß einem der Ansprüche 1 bis 4, **dadurch gekennzeichnet, dass** diese zusätzlich e) wenigstens einen Thermostabilisator aus der Gruppe der sterisch gehinderten Phenole, enthaltend wenigstens eine Struktur der Formel (I), enthalten,

   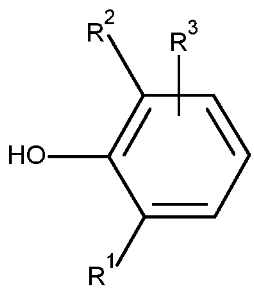

   (I)

   worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

6. Zusammensetzungen gemäß einem der Ansprüche 1 bis 5, **dadurch gekennzeichnet, dass** diese zusätzlich zu den Komponenten a) bis e) oder anstelle der Komponenten d) und/oder e) noch f) wenigstens einen Füllstoff aus der Gruppe Glaskugeln, gemahlenes Glas, amorphe Kieselsäure, Calciumsilikat, Calciummetasilikat, Magnesiumcarbonat, Kaolin, calciniertes Kaolin, Kreide, Glimmer, Phlogopit, Bariumsulfat, Feldspat und Montmorillonit enthalten.

7. Zusammensetzungen gemäß einem der Ansprüche 4 bis 6, **dadurch gekennzeichnet, dass** diese zusätzlich zu den Komponenten a) bis f) oder anstelle der Komponenten d) und/oder e) und/oder f) noch g) wenigstens einen Entformer enthalten.

8. Zusammensetzungen gemäß Anspruch 7, **dadurch gekennzeichnet, dass** diese als Entformer langkettige Fettsäuren, deren Salze, sowie deren Esterderivate oder Amidderivate, Montanwachse sowie niedermolekulare Polyethylen- bzw. Polypropylenwachse enthalten.

9. Formmassen und Erzeugnisse enthaltend die Zusammensetzungen gemäß einem der Ansprüche 1 bis 8.

10. Erzeugnisse gemäß Anspruch 9, **dadurch gekennzeichnet, dass** es sich um Fasern, Folien, Formkörper, Composit Strukturen sowie überspritzte Composit Strukturen handelt.

11. Erzeugnisse gemäß Anspruch 10, **dadurch gekennzeichnet, dass** der Quotient aus Verarbeitungsschwindung parallel zur Spritzrichtung und Verarbeitungsschwindung senkrecht zur Spritzrichtung oberhalb von 0,8 liegt.

12. Verwendung der Erzeugnisse gemäß Anspruch 10 oder 11 in Artikeln für die Kraftfahrzeug-, Elektro-, Elektronik-, Telekommunikations-, Informationstechnologie-, Solar-, Computerindustrie, für den Haushalt, für den Sport, für medizinische Anwendungen, für die Unterhaltungsindustrie und für LED-Anwendungen.

13. Verfahren zur Herstellung von Zusammensetzungen in Form von Formmassen und daraus herzustellender Erzeugnisse, **dadurch gekennzeichnet, dass** man die Komponenten der Zusammensetzungen gemäß einem der Ansprüche 1 bis 8 in wenigstens einem Mischwerkzeug mischt, zu einer Formmasse in Form eines Strangs austrägt, bis zur Granulierfähigkeit abkühlt und granuliert und als Matrixmaterial einem Spritzguss, einem Blasformvorgang oder einer Extrusion unterzieht.

14. Verfahren zur flammfesten Ausrüstung von als Komponente a) einzusetzenden Polyamiden, vorzugsweise Polyamid 6, und daraus herzustellender Erzeugnisse in Form von Fasern, Folien, Formkörpern, Composit Strukturen sowie überspritzten Composit Strukturen, **dadurch gekennzeichnet, dass** man ein Stabilisatorsystem aus als Komponente b) einzusetzendem Magnesiumhydroxid mit einem Si-Gehalt < 15000 ppm und als Komponente c) einzusetzendem Bornitrid einsetzt, wobei auf 100 Gewichtsteile der Komponente a) 100 bis 280 Gewichtsteile von Komponente b) und 10 bis 150 Gewichtsteile von Komponente c) eingesetzt werden.

## Claims

1. Compositions comprising

   a) polyamide 6 or polyamide 66,
   b) magnesium hydroxide having an Si content of < 15 000 ppm and
   c) boron nitride, wherein per 100 parts by weight of component a) 100 to 280 parts by weight of component b) and 10 to 150 parts by weight of component c) are employed.

2. Compositions according to Claim 1, **characterized in that** they comprise component b) in a purity of at least 96 wt%.

3. Compositions according to Claim 1 or 2, **characterized in that** component b) additionally has an Fe content of < 1500 ppm.

4. Compositions according to any of Claims 1 to 3, **characterized in that** they further comprise d) titanium dioxide.

5. Compositions according to any of Claims 1 to 4, **characterized in that** they further comprise
   e) at least one heat stabilizer from the group of sterically hindered phenols comprising at least one structure of formula (I),

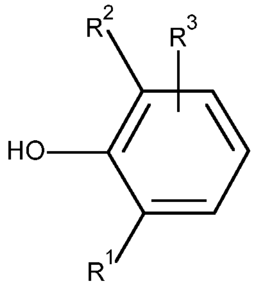

(I)

where $R^1$ and $R^2$ represent an alkyl group, a substituted alkyl group or a substituted triazole group, wherein radicals $R^1$ and $R^2$ may be identical or different and $R^3$ represents an alkyl group, a substituted alkyl group, an alkoxy group or a substituted amino group.

6. Compositions according to any of Claims 1 to 5, **characterized in that** they further comprise, in addition to components a) to e) or instead of components d) and/or e), f) at least one filler from the group of glass beads, ground glass, amorphous silica, calcium silicate, calcium metasilicate, magnesium carbonate, kaolin, calcined kaolin, chalk, mica, phlogopite, barium sulphate, feldspar and montmorillonite.

7. Compositions according to any of Claims 4 to 6, **characterized in that** they further comprise, in addition to components a) to f) or instead of components d) and/or e) and/or f), g) at least one demoulding agent.

8. Compositions according to Claim 7, **characterized in that** they comprise as demoulding agents long-chain fatty acids, salts thereof and ester derivatives or amide derivatives thereof, montan waxes and low molecular weight polyethylene/polypropylene waxes.

9. Moulding materials and articles of manufacture comprising the compositions according to any of Claims 1 to 8.

10. Articles of manufacture according to Claim 9, **characterized in that** they are fibres, films, moulded articles, composite structures and overmoulded composite structures.

11. Articles of manufacture according to Claim 10, **characterized in that** the quotient of processing shrinkage parallel to the direction of moulding and processing shrinkage perpendicular to the direction of moulding is greater than 0.8.

12. Use of the articles of manufacture according to Claim 10 or 11 in articles for the motor vehicle, electrical, electronics, telecommunications, information technology, solar and computer industries, for the household, for sport, for medical applications, for the leisure industry and for LED applications.

13. Method of producing compositions in the form of moulding materials and articles of manufacture producible therefrom, **characterized in that** the components of the compositions according to any of Claims 1 to 8 are mixed in at least one mixing apparatus, discharged to afford a moulding material in the form of an extrudate, cooled until pelletizable and pelletized and subjected as matrix material to an injection moulding operation, a blow moulding operation or an extrusion.

14. Method of flameproofing polyamides to be employed as component a), preferably polyamide 6, and articles of manufacture producible therefrom in the form of fibres, films, moulded articles, composite structures and overmoulded composite structures, **characterized in that** a stabilizer system composed of magnesium hydroxide to be employed as component b) and having an Si content of < 15 000 ppm and boron nitride to be employed as component c) is employed wherein per 100 parts by weight of component a) 100 to 280 parts by weight of component b) and 10 to 150 parts by weight of component c) are employed.

**Revendications**

1. Compositions contenant

   a) du polyamide 6 ou du polyamide 66,

b) de l'hydroxyde de magnésium doté d'une teneur en Si < 15 000 ppm et
c) du nitrure de bore, pour 100 parties en poids du composant a), 100 à 280 parties en poids du composant b) et 10 à 150 parties en poids du composant c) étant utilisées.

2. Compositions selon la revendication 1, **caractérisées en ce que** celles-ci contiennent le composant b) en une pureté d'au moins 96 % en poids.

3. Compositions selon la revendication 1 ou 2, **caractérisées en ce que** le composant b) présente en outre une teneur en Fe < 1500 ppm.

4. Compositions selon l'une quelconque des revendications 1 à 3, **caractérisées en ce que** celles-ci contiennent en outre d) du dioxyde de titane.

5. Compositions selon l'une quelconque des revendications 1 à 4, **caractérisées en ce que** celles-ci contiennent en outre
e) au moins un stabilisateur thermique du groupe des phénols stériquement encombrés, contenant au moins une structure de formule (I),

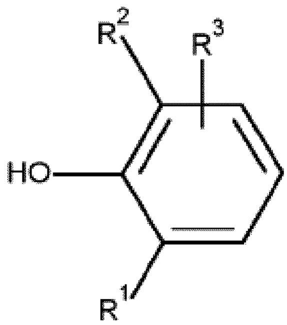

(I)

$R^1$ et $R^2$ représentant un groupe alkyle, un groupe alkyle substitué ou un groupe triazole substitué, les radicaux $R^1$ et $R^2$ pouvant être identiques ou différents et $R^3$ représentant un groupe alkyle, un groupe alkyle substitué, un groupe alcoxy ou un groupe amino substitué.

6. Compositions selon l'une quelconque des revendications 1 à 5, **caractérisées en ce que** celles-ci contiennent outre les composants a) à e) ou à la place des composants d) et/ou e), encore f) au moins une charge du groupe des billes de verre, du verre moulu, de la silice amorphe, du silicate de calcium, du métasilicate de calcium, du carbonate de magnésium, du kaolin, du kaolin calciné, de la craie, du mica, du phlogopite, du sulfate de baryum, du feldspath et de la montmorillonite.

7. Compositions selon l'une quelconque des revendications 4 à 6, **caractérisées en ce que** celles-ci contiennent outre les composants a) à f) ou à la place des composants d) et/ou e) et/ou f), encore g) au moins un agent de démoulage.

8. Compositions selon la revendication 7, **caractérisées en ce que** celles-ci contiennent, en tant qu'agents de démoulage, des acides gras à chaîne longue, leurs sels, ainsi que leurs dérivés d'ester ou dérivés d'amide, des cires de lignite ainsi que des cires de polyéthylène ou de polypropylène à bas poids moléculaire.

9. Masses moulées et produits contenant les compositions selon l'une quelconque des revendications 1 à 8.

10. Produits selon la revendication 9, **caractérisés en ce que** ce sont des fibres, des feuilles, des corps moulés, des structures composites ainsi que des structures composites surpulvérisées.

11. Produits selon la revendication 10, **caractérisés en ce que** le quotient entre le retrait de traitement parallèlement à la direction de pulvérisation et le retrait de traitement perpendiculairement à la direction de pulvérisation se situe au-dessus de 0,8.

12. Utilisation des produits selon la revendication 10 ou 11 dans des articles pour l'industrie automobile, l'industrie

électrique, l’industrie électronique, l’industrie des télécommunications, l’industrie des technologies de l’information, l’industrie solaire, l’industrie informatique, pour la maison, pour le sport, pour des applications médicales, pour l’industrie du divertissement et pour des applications dans des LED.

**13.** Procédé pour la préparation de compositions sous forme de masses moulées et de produits préparés avec celles-ci, **caractérisé en ce qu’**on mélange les composants des compositions selon l’une quelconque des revendications 1 à 8 dans au moins un outil de mélange, on les éjecte en une masse moulée en forme de brin, on les refroidit jusqu’à l’aptitude à la granulation et on les granule et on les soumet en tant que matériau de matrice à un moulage par injection, à un procédé de soufflage ou à une extrusion.

**14.** Procédé pour l’équipement ignifugé de polyamides à utiliser en tant que composant a), de préférence de polyamide 6, et de produits préparés avec ceux-ci sous forme de fibres, de feuilles, de corps moulés, de structures composites ainsi que de structures composites surpulvérisées, **caractérisé en ce qu’**on utilise un système de stabilisateur composé d’hydroxyde de magnésium à utiliser en tant que composant b) doté d’une teneur en Si < 15 000 ppm et de nitrure de bore à utiliser en tant que composant c), pour 100 parties en poids du composant a), 100 à 280 parties en poids du composant b) et 10 à 150 parties en poids du composant c) étant utilisées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0605861 A2
- WO 2014202649 A1
- EP 0614933 A2
- EP 0355165 A1
- EP 2816083 A1
- DE 102011084519 A1
- DE 2702661 A
- US 4360617 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- WO 2009003976 A1
- DE 4236122 A
- WO 2011014754 A1
- WO 2011014751 A1


### In der Beschreibung aufgeführte Nicht-Patentliteratur


- *CHEMICAL ABSTRACTS,* 25038-54-4
- *CHEMICAL ABSTRACTS,* 32131-17-2
- **H. DOMININGHAUS.** Die Kunststoffe und ihre Eigenschaften. VDI-Verlag, 1976, 272 ff
- **HANS DOMININGHAUS.** Die Kunststoffe und ihre Eigenschaften. 1998, 14
- *CHEMICAL ABSTRACTS,* 1309-42-8
- Chemie Ingenieur Technik. Wiley-VCH Verlags GmbH, 2000, vol. 72, 273-276
- Dispersing Powders in Liquid for Particle Size Analysis. Horiba Instruments Inc, 2013
- *CHEMICAL ABSTRACTS,* 10043-11-5
- *CHEMICAL ABSTRACTS,* 13463-67-7
- *CHEMICAL ABSTRACTS,* 23128-74-7
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 67479-91-8
- *CHEMICAL ABSTRACTS,* 308063-67-4
- *CHEMICAL ABSTRACTS,* 13983-17-0
- *CHEMICAL ABSTRACTS,* 65997-17-3
- *CHEMICAL ABSTRACTS,* 1592-23-0
- *CHEMICAL ABSTRACTS,* 110-30-5
- *CHEMICAL ABSTRACTS,* 126-58-9
- *CHEMICAL ABSTRACTS,* 78-24-0
- *CHEMICAL ABSTRACTS,* 14807-96-6
- **ULLMANN.** Enzyklopädie der Technischen Chemie. 1980, vol. 19, 280 ff
- *CHEMICAL ABSTRACTS,* 9003-56-9
- *Kunststoffe,* 2008, vol. 8, 119-121
- *CHEMICAL ABSTRACTS,* 1078142-02-5
- **BODO CARLOWITZ.** Tabellarische Übersicht über die Prüfung von Kunststoffen. Giesel-Verlag für Publizität, 1992, 16-17
- **THIELEN ; HARTWIG ; GUST.** Blasformen von Kunststoffhohlkörpern. Carl Hanser Verlag, 2006, 127-129
- Test for Flammability of Plastic Materials for Parts in Devices and Appliances. Standard of Safety. Underwriters Laboratories Inc, 1998, 14-18